**Europäisches Patentamt**

**European Patent Office**

**Office européen des brevets**

(11) Veröffentlichungsnummer: **0 422 475 A1**

(19)

(12)

# EUROPÄISCHE PATENTANMELDUNG

(21) Anmeldenummer: **90118763.3**

(51) Int. Cl.5: **B23P 19/02**

(22) Anmeldetag: **29.09.90**

(30) Priorität: **11.10.89 DE 3933902**

(43) Veröffentlichungstag der Anmeldung:
**17.04.91 Patentblatt 91/16**

(84) Benannte Vertragsstaaten:
**AT BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Bruck, Wolfgang**
**Silcher Weg 14**
**W-6944 Hemsbach(DE)**
Erfinder: **Ziegle, Bernhard**

**Friedhofstrasse 9**
**W-6725 Roemerberg(DE)**
Erfinder: **Mess, Karl-Heinz**
**Goldboehlstrasse 30**
**W-6737 Boehl-Iggelheim(DE)**
Erfinder: **Mueller, Karl-Heinz**
**Weinstrasse 197**
**W-6730 Neustadt(DE)**
Erfinder: **Hofmann, Norbert**
**Kurt-Schumacher-Strasse 40**
**W-6700 Ludwigshafen(DE)**
Erfinder: **Berlinghof, Heinz**
**Waldseer Strasse 107**
**W-6707 Schifferstadt(DE)**

(54) Vorrichtung zum Abziehen von Schneckenelementen von einer Kernwelle.

(57) Für ein einfaches und insbesondere gefahrloses Abziehen von Schneckenelementen (2) von einer Kernwelle (1) wird eine Vorrichtung vorgeschlagen, die aus einer zwischen den Laufschienen (3, 4) einer Rahmenkonstruktion angebrachten ortsfesten Lagereinheit (7), zwei auf den Laufschienen vor und hinter der Lagereinheit verfahrbaren Laufwagen (8, 9) sowie einer mit dem Laufwagen (9) verbundenen Heizeinrichtung (10) besteht. Die Lagereinheit (7) enthält zwei vorzugsweise hydraulisch oder pneumatisch schwenkbare Gehäusebacken (44, 45) und eine Abziehhülse (50, 51), die zum einen mit dem abzuzie- henden Schneckenelement und zum anderen mit den Gehäusebacken kraftschlüssig verbindbar ist. Von den Laufwagen weist der eine (8) eine Spann- vorrichtung zum Befestigen der Kernwelle auf und steht mit einem motorischen Antrieb (11-13) zum Erzeugen einer Relativbewegung gegenüber dem Schneckenelement in der Abziehhülse in Verbin- dung. Der andere Laufwagen (9) ist unabhängig ver- fahrbar und besitzt eine vertikal verstellbare Rollen- auflage (38) sowie wenigstens eine Feststelleinrich- tung.

EP 0 422 475 A1

FIG.1/5

# VORRICHTUNG ZUM ABZIEHEN VON SCHNECKENELEMENTEN VON EINER KERNWELLE

Schneckenextruder sind häufig nach dem Baukasten-Prinzip aufgebaut, so daß, je nach verfahrenstechnischer Aufgabenstellung solcher Extruder, deren Baugruppen variiert werden können. Es lassen sich sowohl die Schnecken als auch die Schneckengehäuse entsprechend zusammensetzen. Hierzu bestehen die Schnecken aus einer durchgehenden Kernwelle, auf die, gegen Verdrehung durch Nut und Feder gesichert, Schneckenelemente (Förder-, Misch-, Knet- und Abstauelemente) aufgeschoben sind. Je nach zu verarbeitendem Produkt werden die Kernwellen mit Schneckenelementen unterschiedlicher Steigung, Steigungsrichtung, Gangtiefe, Gangzahl, Stegbreite, Versatzwinkel und Länge bestückt. Bei Kombinationswechsel sowie bei Instandsetzungsmaßnahmen müssen die Schneckenelemente von den Kernwellen abgezogen werden. Aufgrund von zwischen Kernwelle und Schneckenelementen eingedrungenem und vercracktem Produkt gestaltet sich der Abziehvorgang indes äußerst schwierig.

Bisher erfolgte das Demontieren der Schneckenelemente in aufwendiger Handarbeit, indem die Schneckenelemente über den gesamten Umfang erwärmt und mittels Hammer bzw. Preßlufthammer von der Kernwelle gelöst werden. Das Erwärmen mit einer Schweißbrennerflamme ist jedoch schwer steuerbar, so daß lokale Überhitzungen und irreparable Werkstoffschädigungen praktisch nicht zu vermeiden sind. Darüber hinaus muß das Erwärmen gegebenenfalls mehrfach durchgeführt werden, da während der zeitraubenden Demontage der Schneckenelemente diese abkühlen, was gegenüber der Kernwelle einen erneuten Kraftschluß zur Folge hat. Das eigentliche Abziehen der Schneckenelemente erfordert großes handwerkliches Geschick. In Folge von Verkantungen kommt es dennoch immer wieder zu Beschädigungen, beispielsweise zu Markierungen auf der Kernwelle. Schließlich müssen die Arbeiten auch unter erschwerten Bedingungen, wie Rauch und Schmutz, durchgeführt werden. Alles in allem ist für das Abziehen von Schneckenelementen von einer Kernwelle ein hoher Arbeitsaufwand erforderlich, dem eine vergleichsweise geringe Arbeitsleistung gegenübersteht.

Der Erfindung liegt die Aufgabe zugrunde, das Abziehen von Schneckenelementen von einer Kernwelle zu vereinfachen und zugleich kontinuierlich durchzuführen.

Zur Lösung dieser Aufgabe wird eine Vorrichtung mit den Merkmalen des Anspruchs 1 vorgeschlagen.

Mit der erfindungsgemäßen Vorrichtung lassen sich Schneckenelemente schnell und insbesondere gefahrlos von einer Kernwelle abziehen. Hierzu ist die Kernwelle in zwei im Abstand zueinander angeordneten Laufwagen geführt. Einer der Laufwagen ist mit einer höhenverstellbaren Rollenauflage ausgerüstet, so daß die Schnecke in einfacher Weise horizontal ausgerichtet werden kann. Mechanische Beschädigungen sowohl der Schneckenelemente als auch der Kernwelle während des kontinuierlichen Abziehvorganges werden dadurch vermieden.

Das abzuziehende Schneckenelement wird nach seiner Erwärmung mit Hilfe des am freien Ende der Kernwelle angreifenden und mit einem motorischen Antrieb zusammenwirkenden Laufwagens in eine ortsfeste Lagereinheit verfahren und in der Lagereinheit befestigt. Für die Arretierung des Schneckenelements in der Lagereinheit ist eine aus Halbschalen bestehende Abziehhülse vorgesehen, die zum einen mit dem Schneckenelement und zu anderen mit den sie umfassende Gehäusebacken der Lagereinheit kraftschlüssig verbunden wird. Das Abziehen des Schneckenelements erfolgt durch eine Relativbewegung der Kernwelle, die durch den antreibbaren Laufwagen bewirkt wird. Manuelle Eingriffe sind dabei nicht erforderlich.

In vorteilhafter Weise kann die Vorrichtung so ausgestattet sein, wie in den Ansprüchen 2 bis 6 angegeben. Insbesondere wenn die Ausbildung so erfolgt, wie im Anspruch 5 angegeben, ist eine sehr rasche Demontage der Schnecke sichergestellt. Durch die induktive Erwärmung der Schneckenelemente läßt sich unter Ausnutzung des sogenannten Skineffektes eine exakte und kontrollierte Temperierung bei nur geringer Erwärmung der Kernwelle erreichen. Zudem ist nur eine verhältnismäßig kurze Aufheizzeit notwendig, um zwischen Schneckenelementbohrung und Kernwellenaußendurchmesser ein für den Abziehvorgang erforderliches Spiel zu ermöglichen.

Die Erfindung wird nachfolgend unter Hinweis auf die Zeichnungen anhand eines Ausführungsbeispieles näher erläutert. Es zeigt

Figur 1 eine Seitenansicht der erfindungsgemäßen Vorrichtung in schematischer Darstellung,

Figur 2 eine Draufsicht der Vorrichtung entsprechend Figur 1,

Figur 3 eine Seitenansicht des antreibbaren Laufwagens,

Figur 4 einen Querschnitt des Laufwagens mit vertikal verstellbarer Rollenauflage,

Figur 5 die ortsfeste Lagereinheit, teilweise geschnitten,

Figur 6 eine Aufsicht der Abziehhülse und

Figur 7 eine Seitenansicht der Abziehhülse entsprechend Figur 6.

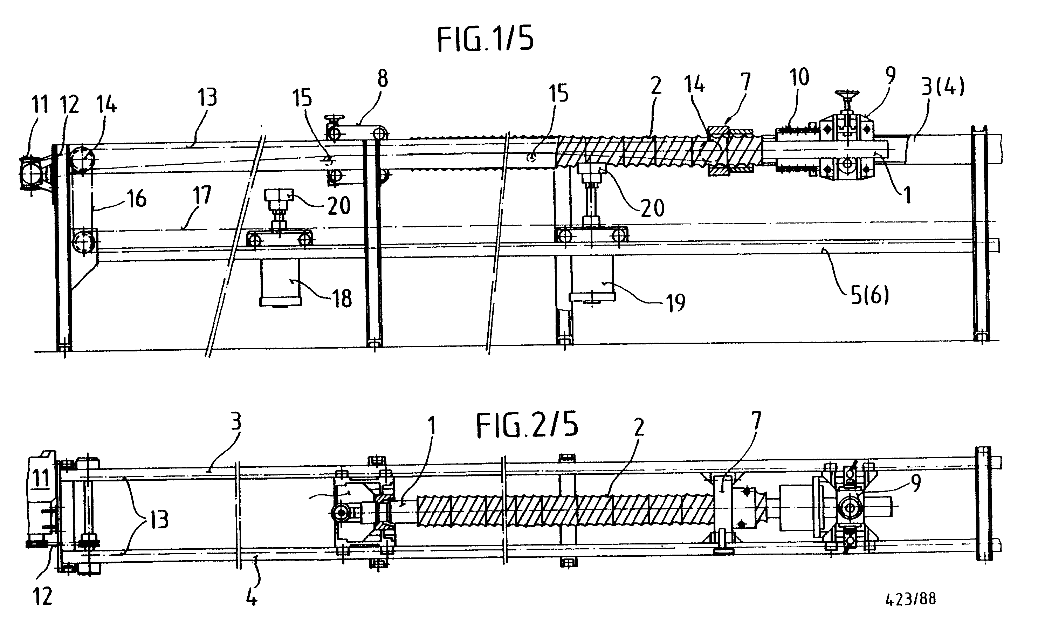

Gemäß den Figuren 1 und 2 sind in einer Rahmenkonstruktion obere Laufschienen (3, 4) aus einem U-Profil und untere Laufschienen (5, 6) aus einem Winkelprofil angebracht. Zwischen den parallelen oberen Laufschienen ist eine ortsfeste Lagereinheit (7) befestigt. Vor und hinter dieser Lagereinheit ist jeweils ein Laufwagen (8) und (9) auf den Schienen (3, 4) verfahrbar, wobei der Laufwagen (9) mit einer aus einer Induktionsspule bestehenden Heizeinrichtung (10) verbunden ist.

Mit (11) ist ein Antriebsmotor bezeichnet, der über ein Vorgelege (12) auf einen zweisträngigen Kettentrieb (13) wirkt. Das obere Trum der Kettenstränge ist an den Laufwagen (8) angeschlossen, so daß dieser zwischen den Umlenkrädern (14) hin- und herbewegt werden kann. Das untere Kettentrum liegt auf Kettenrädern (15) auf. Ein weiteres Vorgelege (16) treibt einen zweiten ebenfalls zweisträngigen Kettentrieb (17) an, über den die Laufwagen (18) und (19) auf den parallelen Schienen (5, 6) verfahren werden. Jeder dieser Laufwagen (18, 19) enthält eine höhenverstellbare Wellenauflage (20).

Zum Abziehen von Schneckenelementen (2) von der Kernwelle (1) einer Schnecke wird die Schnecke auf die Wellenauflagen (20) der Laufwagen (18, 19) aufgelegt und die Wellenauflagen hydraulisch oder pneumatisch so verstellt, daß die Kernwelle niveaugleich zu dem Laufwagen (8) und der geöffneten Lagereinheit (7) zu liegen kommt. Es wird anschließend die Kernwelle in dem Laufwagen (8) befestigt, der Laufwagen (9) hinter der Lagereinheit in den Bereich des freien Endes der Kernwelle verfahren und seine Rollenauflage (38) zur Abstützung der Kernwelle entsprechend verstellt.

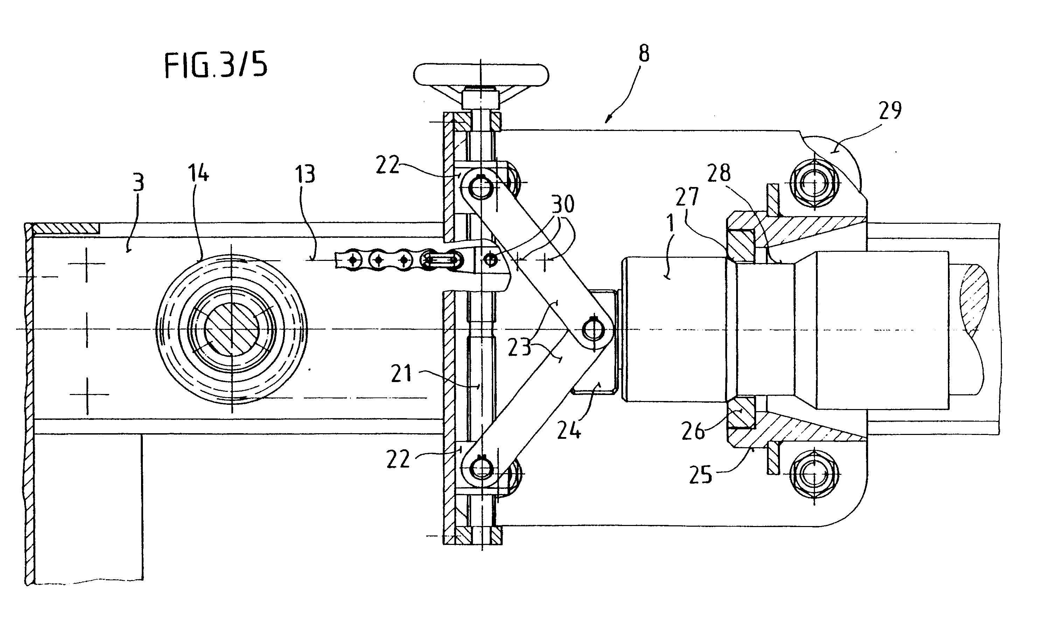

Zu diesem Zweck enthält der Laufwagen (8) eine Spannvorrichtung, die aus einer Gewindespindel (21) mit einem rechts- und einem linksgängigen Gewindeabschnitt sowie einem Kulissenstein (22) auf jedem Gewindeabschnitt besteht. An den Kulissensteinen sind beidseits Kniehebel (23) angeschlossen, welche bei entsprechender Bewegung der Gewindespindel eine Druckplatte (24) gegen die Stirnfläche der in einer Nabe (25) gelagerten Kernwelle (1) pressen. Hierzu ist in einer Ausnehmung der Nabe ein zweiteiliger Klemmring (26) eingesetzt. Dieser wird gegen die Schulter (27) der Hinterschneidung (28) der Kernwelle und gegen die Nabe (25) gedrückt, wenn durch die Spannvorrichtung (21, 22, 23, 24) eine Axialkraft auf die Kernwelle ausgeübt wird. Für das Verfahren des Laufwagens auf den Schienen (3, 4) sind insgesamt acht Rollen (29) vorgesehen. Der die Fahrbewegung bewirkende Kettentrieb (13), von dem in Figur 3 nur ein Kettenstrang angedeutet ist, schließt bei (30) an den Laufwagen an.

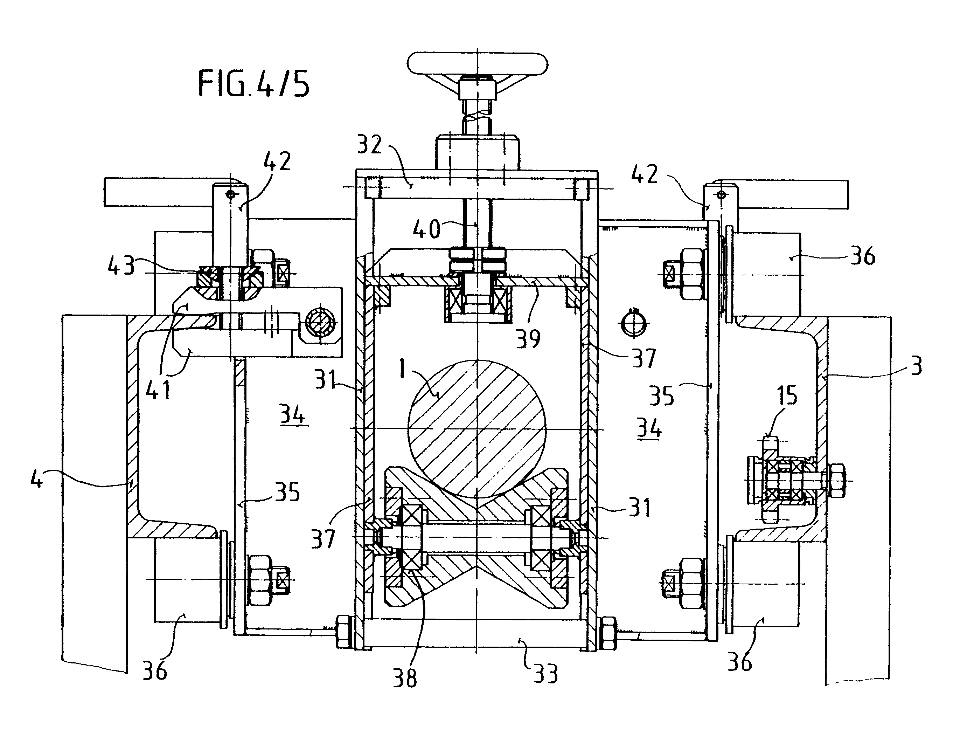

Der hintere Laufwagen (9) ist nicht an den Kettentrieb (13) angeschlossen, sondern von Hand verfahrbar. Er besteht aus einem Gehäuse (31, 32, 33), an dessen Gehäuseteilen (31) Platten (34) und (35) angebracht sind, wobei jede Platte (35) vier Rollen (36) trägt. In dem Gehäuse sind zwei Gleitplatten (37) eingesetzt, die einerseits durch eine Rollenauflage (38) und andererseits durch ein Joch (39) miteinander verbunden sind. Die vertikale Verstellung der Rollenauflage erfolgt mit Hilfe einer Gewindespindel (40), welche sowohl an dem Joch (39) als auch an dem Gehäuseteil (32) gehalten ist. Außerdem besitzt der Laufwagen jeweils eine auf die Schienen (3) und (4) wirkende Feststelleinrichtung aus zwei Backen (41), einem Spannelement (42) sowie einem Übertragungselement (43)-Figur 4.

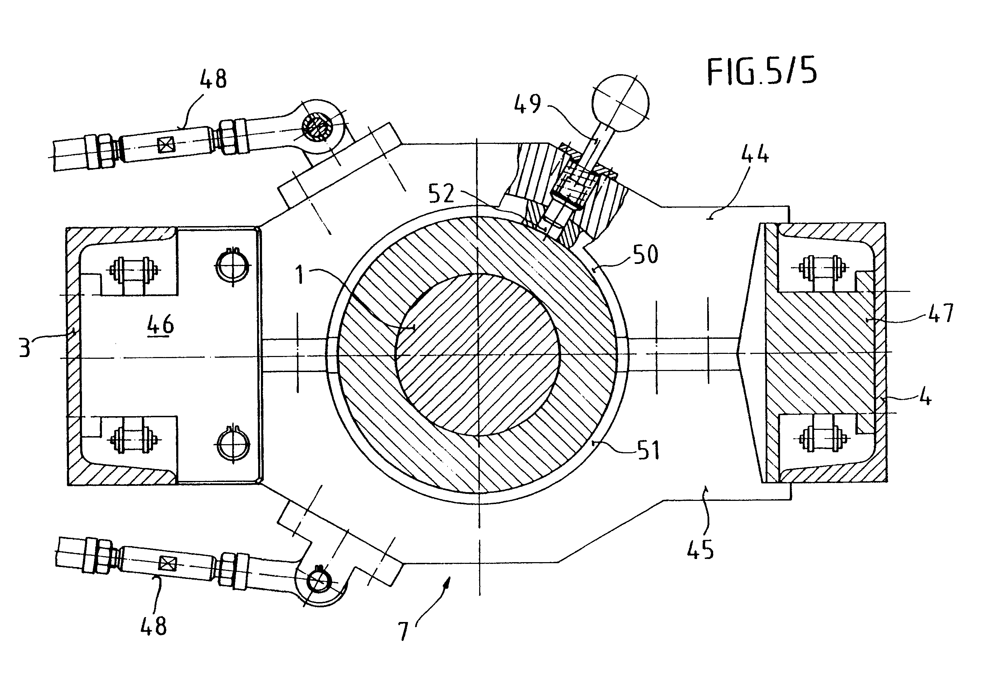

Auf der der Lagereinheit (7) zugewandten Seite des Laufwagens (9) ist die Heizeinrichtung (10) vorgesehen. Das abzuziehende Schneckenelement (2) wird in (10) erwärmt, unmittelbar anschließend in die geöffnete Lagereinheit verfahren und die Lagereinheit geschlossen. Die Darstellung nach Figur 5 zeigt die Lagereinheit in ihrer Schließstellung. Sie umfaßt zwei Gehäusebacken (44) und (45), die an einer an der Laufschiene (3) befestigten Stegplatte (46) angelenkt und mittels jeweils einer hydraulischen oder pneumatischen Kolben-Zylinder-Einheit (48) verschwenkbar sind, sowie eine aus Halbschalen (50, 51) bestehende Abziehhülse. Eine weitere Stegplatte (47) ist an der Laufschiene (4) angeschraubt.

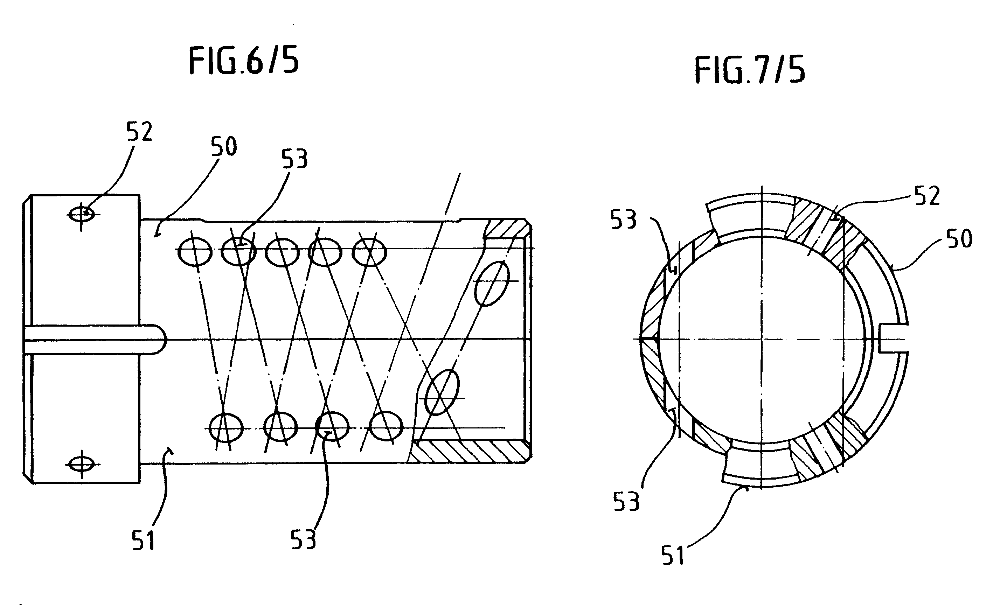

Die Abziehhülse (50, 51) ist in dem Gehäusebacken (44) durch einen federbelasteten Stift (49) fixiert. Hierzu ist im Bund jeder Halbschale wengistens eine Bohrung (52) vorgesehen. In der Mantelfläche der Abziehhülse bzw. Halbschalen (50, 51) sind weitere Bohrungen (53) angebracht, wobei die Bohrungen in der Halbschale (50) gegenüber den in der Halbschale (51) entsprechend der Geometrie der Schneckenelemente (2) versetzt angeordnet sind (Figuren 6 und 7). Die Bohrungen (53) dienen zur Aufnahme eines zylindrischen Sperrelementes (in den Zeichnungen nicht dargestellt), über den das abzuziehende Schneckenelement (2) festgestellt, d.h. kraftschlüssig mit der Abziehhülse bzw. der gesamten Lagereinheit (7) verbunden wird. Während des Abziehvorgangs legt sich das Sperrelement an einer Flanke des Schneckenelements an und hält dieses fest bis die Kernwelle (1) durch den Laufwagen (8) vollständig aus der Lagereinheit entfernt ist. Dabei wird die Schnecke durch wenigstens einen auf den Schienen (5, 6) verfahrbaren Laufwagen (18) und/oder (19) unterstützt.

Die neue Vorrichtung ist einfach zu bedienen und außerordentlich unempfindlich gegen Störungen.

**Ansprüche**

1. Vorrichtung zum Abziehen von Schneckenelementen von einer Kernwelle gekennzeichnet durch
- eine ortsfeste Lagereinheit (7) mit zwei eine aus Halbschalen (50, 51) bestehende Abziehhülse für die Abnahme und Feststellung des jeweiligen Schneckenelementes (2) umfassende Gehäusebakken (44, 45), die schwenkbar zwischen parallelen Laufschienen (3, 4) befestigt sind und
- jeweils einen auf den Laufschienen vor und hinter der Lagereinheit verfahrbaren Laufwagen (8) und (9), von denen
- der Laufwagen (8) vor der Lagereinheit eine Spannvorrichtung (21, 22, 23, 24) zum Befestigen der Kernwelle (1) aufweist und mit einem motorischen Antrieb (11-13) zum Erzeugen einer Relativbewegung gegenüber dem Schneckenelement in der Abziehhülse in Verbindung steht und
- der Laufwagen (9) hinter der Lagereinheit mit einer vertikal verstellbaren Rollenauflage (38) für die Kernwelle und wenigstens einer Feststelleinrichtung (41, 42, 43) ausgestattet ist, sowie
- eine Heizeinrichtung (10) zwischen der Lagereinheit (7) und dem hinteren Laufwagen (9).

2. Vorrichtung nach Anspruch 1, dadurch gekennzeichnet, daß die Gehäusebacken (44, 45) an einer Laufschiene (3) angeschlossen und mittels einer hydraulischen oder pneumatischen Kolben-Zylinder-Einheit (48) nach oben bzw. unten schwenkbar sind.

3. Vorrichtung nach Anspruch 1, dadurch gekennzeichnet, daß die Abziehhülse (50, 51) Bohrungen (52) und (53) für die Aufnahme wenigstens eines Sperrelementes aufweist, wobei die Bohrungen (53) einer Halbschale gegenüber den der anderen Halbschale entsprechend der Geometrie der Schneckenelemente (2) versetzt sind.

4. Vorrichtung nach Anspruch 1, dadurch gekennzeichnet, daß der Laufwagen (8) durch einen Kettentrieb verfahrbar ist.

5. Vorrichtung nach Anspruch 1, dadurch gekennzeichnet, daß die Heizeinrichtung (10) aus einer Induktionsspule besteht.

6. Vorrichtung nach einem oder mehreren der Ansprüche 1 bis 5, dadurch gekennzeichnet, daß unterhalb der Laufschienen (3, 4) ein weiteres Paar Laufschienen (5, 6) vorgesehen ist, auf denen zwei Laufwagen (18) und (19) mit einer höhenverstellbaren Wellenauflage (20) verfahrbar sind.

FIG.1/5

FIG.2/5

423/88

FIG.3/5

EP 0 422 475 A1

FIG.4/5

FIG.5/5

FIG.7/5

FIG.6/5

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int Cl⁵) |
|---|---|---|---|
| A | DE - C1 - 3 611 113 <br> (WERNER & PFLEIDERER GMBH) <br> * Patentansprüche 1,2,6; Fig. 1,2 * | 1 | B 23 P 19/02 |
| A | US - A - 4 030 186 <br> (MYERS et al.) <br> * Spalte 8, 2. Absatz; Fig. 2,3 * | 2 | |
| A | DE - A1 - 2 721 140 <br> (VEB WERKZEUGMASCHINEN KOMBINAT 7. Oktober) <br> * Seite 7, Zeilen 7-13; Fig. 3a * | 3 | |
| A | US - A - 4 384 395 <br> (GIETMAN et al.) <br> * Anspruch 6; Fig. 2 * | 4 | |

| RECHERCHIERTE SACHGEBIETE (Int Cl⁵) |
|---|
| B 23 P 19/00 <br> B 29 C 47/00 |

Der vorliegende Recherchenbericht wurde für alle Patentansprüche erstellt.

| Recherchenort | Abschlußdatum der Recherche | Prüfer |
|---|---|---|
| WIEN | 05-12-1990 | BISTRICH |